# EUROPEAN PATENT SPECIFICATION

(11) **EP 3 143 838 B1**
(45) Date of publication and mention of the grant of the patent: **31.12.2025**
(21) Application number: 14891997.0
(22) Date of filing: 14.05.2014
(51) Int. Cl.: H05B 6/64, H05B 6/70

(54) **METHOD FOR THE DENSIFICATION AND SPHEROIDIZATION OF SOLID AND SOLUTION PRECURSOR DROPLETS OF MATERIALS USING PLASMA**
VERFAHREN ZUR VERDICHTUNG UND EINFORMUNG VON FESTSTOFFEN UND LÖSUNGSVORLÄUFERTRÖPFCHEN VON MATERIALIEN MITHILFE VON PLASMA
PROCÉDÉ POUR LA DENSIFICATION ET LA SPHÉROÏDISATION DE GOUTTELETTES DE PRÉCURSEUR SOLIDE ET DE SOLUTION DE MATÉRIAUX À L'AIDE D'UN PLASMA

(43) Date of publication of application: 22.03.2017
(73) Proprietor: 6K Inc., North Andover, MA 01845 (US)
(72) Inventor: HADIDI, Kamal, Somerville, MA 02143 (US); REDJDAL, Makhlouf, Stoneham, Massachusetts 02180 (US)
(74) Representative: Forresters IP LLP
(86) International application number: PCT/US2014/000091
(87) International publication number: WO 2015/174949

(56) References cited:
- EP-A2- 1 702 690
- US-A1- 2007 075 052
- US-A1- 2008 173 641
- US-A1- 2008 173 641
- US-A1- 2013 270 261

## Description

### Technical Field

The present invention is generally directed to a method for taking feed material and processing the feed material to produce dense and spheroidal products. The feed material is comprised of powder particles from the spray-drying technique or solution precursor droplets containing ceramic or metallic materials. More particularly, the present invention is directed to a method which uses a microwave plasma torch capable of generating a laminar flow pattern during materials processing to produce dense and spheroidal products. The laminar flow in an axisymmetric hot zone with a uniform temperature profile within the torch allows for the production of uniform spheroidal particles with a homogenous materials distribution, which leads to final products possessing superior characteristics.

### Background of the Invention

One of the most important aspects of preparing industrial powders is the spheroidization process, which transforms powders produced by spray drying and sintering techniques, or angular powders produced by conventional crushing methods, into spheres. Spheroidized particles are more homogenous in shape, denser, much less porous, provide higher flowability, and possess lower friability. These characteristics make for powders that are superior for applications such as injection molding, thermal spraying of coatings and provide parts having near net shapes.

Current spheroidization methods employ thermal arc plasma described in U.S. Patent 4076640 issued February 28, 1978 and radio-frequency generated plasma described in U.S. Patent 6919527 issued July 19, 2005. However, these two methods present limitations which result from the characteristics of the radio-frequency plasma and the thermal arc plasma.

In the case of thermal arc plasma, an electric arc is produced between two electrodes and is then blown out of the plasma channel using plasma gas. Powder is then injected from the side, perpendicular or at an angle, into the plasma plume, where it gets exposed to the high temperature of the plasma and is collected as spheres in filters during subsequent processing. An issue with thermal arc plasma is that the high temperature of the electrodes leads to erosion of the electrodes, which leads to contamination of the plasma plume with the electrode material, resulting in the contamination of the powders to be processed. In addition, the thermal arc plasma plume has an inherently uneven temperature gradient, and by injecting powder into the plasma plume from the side, the powder gets exposed to an uneven temperature gradient that leads to the production of particles that are not homogenous in size, density or porosity.

In the case of radio frequency plasma spheroidization, the plasma is produced in a dielectric cylinder by induction at atmospheric pressure. Radio frequency plasmas are known to have low coupling efficiency of the radio frequency energy into the plasma and a lower plasma temperature compared to arc and microwave generated plasmas. The magnetic field responsible for generating the plasma in radio-frequency plasma is non-uniform in profile which leads to an uneven temperature gradient and thus a non-homogenous thermal treatment of the particles. This leads to non-homogeneity in size, microstructure, and density or porosity of the final product.

Thus there is a need to provide a homogenous and uniform high temperature thermal path for all the feed materials processed which results in high purity, contamination-free, and homogenous spherical particles. However, no such method has been reported.

From the above, it is therefore seen that there exists a need in the art to overcome the deficiencies and limitations described herein and above.

EP1702690 discloses a process for dispersion and treatment of particles. US2013/270261 discloses a microwave plasma torch generating laminar flow for materials processing.

### Summary of the Invention

The present invention provides a method according to the claims.

**The** shortcomings of the prior art are overcome and additional advantages are provided through the use of a microwave generated plasma torch apparatus that is capable of producing laminar flow patterns to spheroidize and density geometrically non-uniform powder particles and solution precursor droplets of ceramic materials.

In accordance with one arrangement of the present disclosure a pressurized powder feeder is used to axially inject powder particles into a plasma chamber where the powder particles are entrained in a laminar gas flow pattern and undergo uniform heat treatment by being exposed to a uniform temperature profile within the microwave generated plasma. This results in spheroidal pearl-like particles having uniform density.

In another arrangement of the present disclosure, a droplet maker or atomizer is used to inject solution precursor droplets which are entrained in a laminar gas flow pattern and undergo uniform heat treatment by being exposed to a uniform temperature profile within the microwave generated plasma to produce spheroidal pearl-like particles having uniform density.

Another feature of this invention is that it uses microwave generated plasma in accordance with U.S. Patent Application 13445947.

Therefore, an object of the present invention is to provide a laminar flow environment, free of turbulent flow effects, for the feed material that is processed with the microwave generated plasma, which results in dense and spheroidal particles having uniform sizes and shapes and characterized by a homogenous materials distribution.

It is another object of the present invention to enhance plasma processing of materials so as to provide a product with improved thermal properties, improved corrosion and wear resistance and a higher tolerance to interface stresses.

Additional features and advantages are realized through the techniques of the present invention.

The recitation herein of desirable objects which are met by various embodiments of the present invention is not meant to imply or suggest that any or all of these objects are present as essential features, either individually or collectively, in the most general embodiment of the present invention or in any of its more specific embodiments.

### Brief Description of the Drawings

The subject matter which is regarded as the invention is particularly pointed out and distinctly defined in the appended claims.

The invention, however, both as to organization and method of practice, together with the further objects and advantages thereof, may best be understood by reference to the following description taken in connection with the accompanying drawings in which:
FIG. 1 illustrates a preferred apparatus used for making dense and spheroidized particles which uses the microwave generating source described in US Patent Application 2008/0173641 A1, a dielectric plasma torch as described in US Patent Application 13445947, and a materials feeder such as a powder feeder, or solution precursor reservoir which dispenses powder particles, or solution droplets, in accordance with the present invention;
FIG. 2 illustrates densified and spheroidized MgO-Y₂O₃ particles obtained by the microwave plasma process after injection of spray-dried powder;
FIG. 3 illustrates a method of atomizing droplets using a nebulizing apparatus;
FIG. 4 illustrates densified and spheroidized 7% by weight Y₂O₃-ZrO₂ (7YSZ) ceramic particles, 20 to 38 micrometers in diameter after injection of 7YSZ precursor droplets using a nebulizing injector;
FIG. 5 illustrates densified and spheroidized 7YSZ ceramic particles, 38 to 53 micrometers in diameter after injection of 7YSZ precursor droplets using a nebulizing injector;
FIG.6 illustrates densified and spheroidized 8YSZ ceramic particles, 15 to 35 micrometers in diameter after injection of 9YSZ precursor droplets using a droplet maker;
FIG. 7 illustrates a modified embodiment consisting of an additional process plasma gas to control the velocity of feed material and their residence time in the plasma zone;
FIG. 8. Illustrates a modified embodiment consisting of adding a passivation feed material in the form of a gas or mist through the central tube or the middle tube of the plasma torch;
FIG 9 illustrates a modified embodiment consisting of the addition of one or many inlets to introduce passivation feed material to coat spheroidized product particles after the plasma zone.
FIG. 10 illustrates densified and spheroidized blended alumina-titania and cobalt oxide ceramic particles, 10 to 50 micrometers in diameter after injection of corresponding blended spray dried powder;

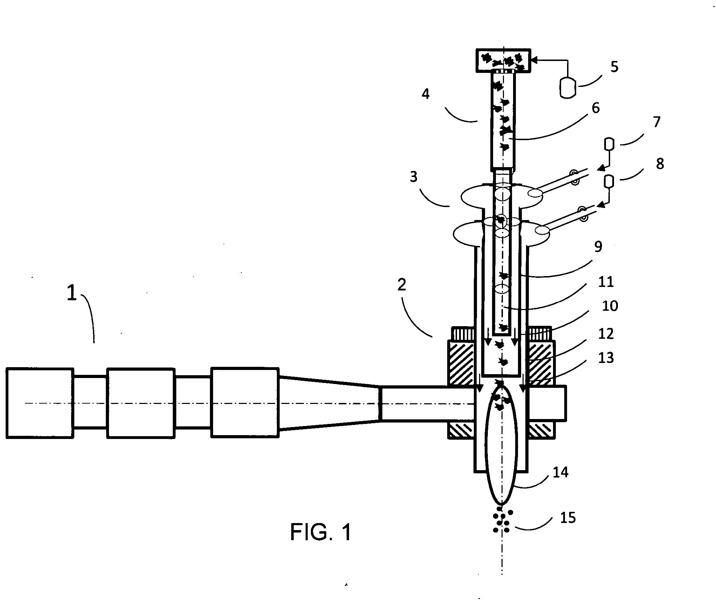

FIG. 1 1 illustrates a method of spheroidization by injection of solid powder using a powder feeder;

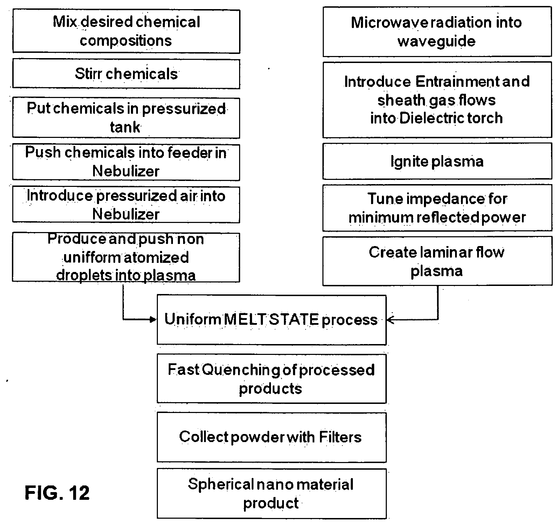

FIG. 12 illustrates a method of spheroidization by injection of a mist of droplets using a nebulizing nozzle; and

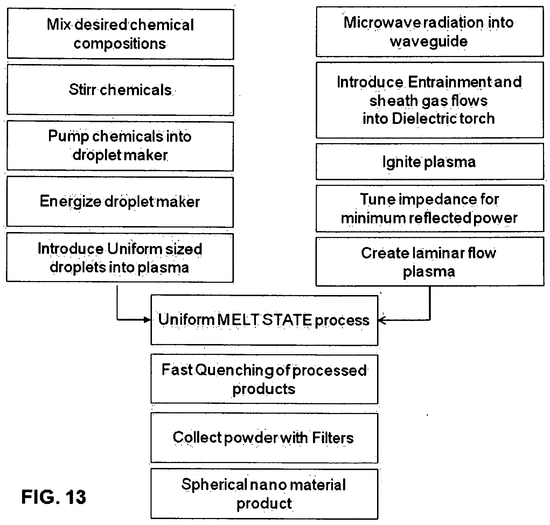

FIG. 13 illustrates a method of spheroidization by injection of a continuous stream of uniform droplets using a frequency driven droplet maker.

### Detailed Description

Referring to FIG. 1, an apparatus to produce dense and spheroidal products which includes a microwave radiation generator 1, a plasma chamber 2, a dielectric sheathing plasma torch 3, and a powder feeder, or solution precursor injector, 4. The microwave radiation generator 1, described in US Patent Application 2008/0173641 A1 is combined with plasma chamber 2 and plasma sheathing torch 3. Both 2 and 3 are described in US Patent Application 13445947. The particle feeder 4 is an injection apparatus with a pressurized source 5 that can feed solid powder particles 6 into dielectric plasma torch 3. When powder injection is used, particles 6 may be a product of spray-drying techniques or other techniques. Alternatively, particles 6 may be droplets of solution precursor injected using an atomizer, or a droplet maker energized with a high frequency electrical drive. Pressurized sources 7 and 8 are used to introduce process gases as inputs into 3 to entrain and accelerate particles 6 along axis 11 towards plasma 14. First, particles 6 are accelerated by entrainment using core laminar gas flow 10 created through annular gap 9. Cooling laminar flow 13 created through annular gap 12, flows at not lower than 3 m³ (100 standard cubic feet) per hour in the case of solid powder feed or atomized injection, and provides laminar sheathing for the inside wall of dielectric torch 3 to protect it from melting due to heat radiation from plasma 14. High flow is also needed to keep particles 6 from reaching the inner wall of 3 where plasma attachment could take place. Relatively lower gas flows are needed when using a droplet maker injector as the flow of particles is more uniform and follows axis 11 closely. Particles 6 are guided by laminar flows 10 and 13 towards microwave plasma 14 were they undergo homogeneous thermal treatment to become dense and spherical product particles 15. The densification and spheroidization of spray-dried ceramic solid particles 6, or of droplets of solution precursor materials, is achieved by choosing the appropriate experimental parameters capable of maintaining stable microwave generated plasma 14 to produce dense and spherical particles 15. These parameters are microwave power in 1, powder particles or solution precursor droplet injection flow rates along axis 11, carrier gas flow rates of laminar entrainment flow 10, laminar cooling flow 13 inside the dielectric sheathing torch 3, heating rates within plasma 15 and quenching rates not less than 10³°C/sec upon exit of plasma 15.

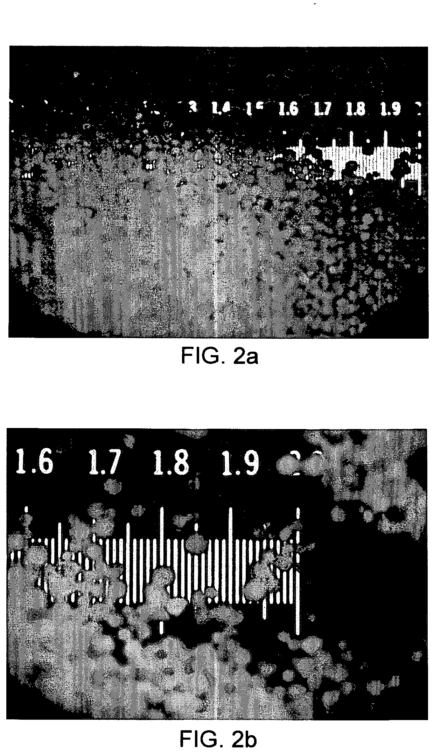

Referring to FIG. 2, this method has been applied to spheroidize particles 6 made of commercial Magnesia- Yttria (MgO-Y₂O₃) solid powder particles obtained by the spray-drying technique from the INFRAMAT Corporation. Particles 6, in the case of INFRAMAT powder, possess closed or semi-spherical morphology, low density, and are highly porous and brittle particles. The powder feeder 4, with a reservoir with low pressure gas flow (<100 kPa (<20 PSI)) from pressurized source 5, provides a fluidized bed for particles 6 which are driven by gas flow through powder feeder 4 towards the input of plasma torch 3. Particles 6 diameters initially ranged between 38 micrometers (µm) and 73 µm. The elimination of small particles prior to injection (particles with diameters less than 37 µm) reduces any recirculation of materials above the hot zone. The elimination of large particles (larger than 75 µm) reduces the diameter range of particle products that will be collected. Sieves with mesh size 400 (38 µm), and 200 (74 µm) have been used to accomplish this classification. Particles 6 are then entrained and accelerated along axis 11 by laminar gas flow 10 for a minimum distance of 50 mm (two (2) inches) towards microwave plasma 14. Laminar flow 10 is crucial in constraining the flow paths of particles 6 to a cylindrical region as close as possible to axis 11. The penetration into plasma 14 is accomplished in such a manner that directional paths of particles 6 take place at the center of plasma 14 along axis 11. Particles 6 are again accelerated, in part, by a second laminar gas flow 13, over a minimum distance of 20 mm (three quarters of an inch) before reaching the top of the plasma flame 14. The primary function of laminar flow 13 is to ensure adequate cooling of the dielectric tube sheath 3 that houses the plasma. Laminar flow 13 need to be high enough to span the remainder of the length of the outer tube of dielectric plasma torch 3. The processing medium that combines the axis-symmetric laminar gas flows 10 and 13, along with the uniform temperature profile of plasma 14, ensures that thermal processing of particles 6 is done volumetrically to yield the dense spherical products 15 shown in FIG. 2a. Two large ticks of the ruler in FIG. 2b correspond to 100 micrometers which demonstrates that particles 15 range in diameter from 15 micrometers to 50 micrometers. The densified and spheroidized particles 6 exhibit a "pearl" like texture and morphology.

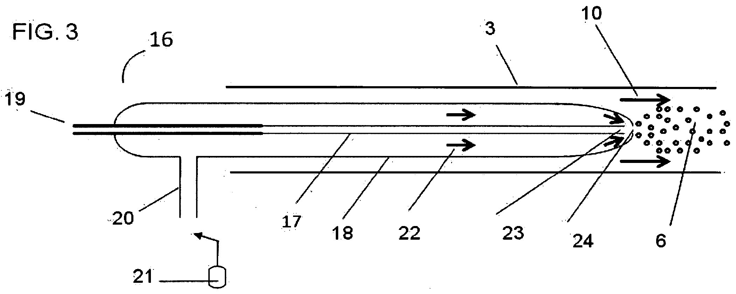

Referring to FIG. 3, particles 6 are produced using a nebulizing apparatus 16 for solution precursor injection. Nebulizer 16 consists of two concentric quartz tubes 17 and 18 which are fused together. A solution precursor of 7YSZ, or any other weight concentration of Yttrium ranging from 3% to 20%, in a pressurized stainless steel tank is introduced at input 19 of tube 17. The solution precursor injection flow rate is in the order of 4 milliliters per minute and the gas tank pressure is about 100 kPa (20 pounds per square inch (PSI)). The length of tube 18 is no smaller than 50 mm (2 inches) and does not exceed 300 mm (one foot). Through input tube 20, a pressurized gas source 21 pushes the atomizing gas flow 22 through an annular gap between concentric tubes 18 and 17 in nebulizer 16. The injected solution precursor exits through orifice 23 where it is atomized by gas flow 22, and exits at orifice 24 of tube 18 as an aerosol of droplet particles 6. The distance between orifice 23 and orifice 24 must not exceed 1 millimeter (mm). The end of tube 18 is tapered so that gas flow 22 enters the jet of solution precursor with an angle close to 90 degrees. Upon exit, particles 6 are entrained by laminar flow 10 in dielectric plasma torch 3, also seen in FIG. 1, and subsequently the particles reach the axis-symmetric thermal processing medium inside dielectric plasma torch 3 where they undergo volumetric heating in plasma 14.

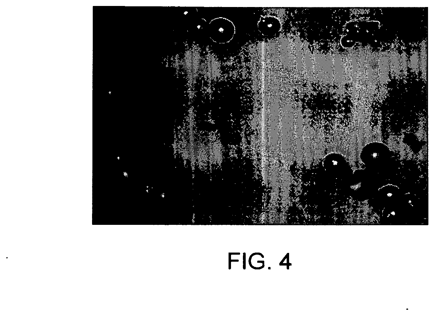

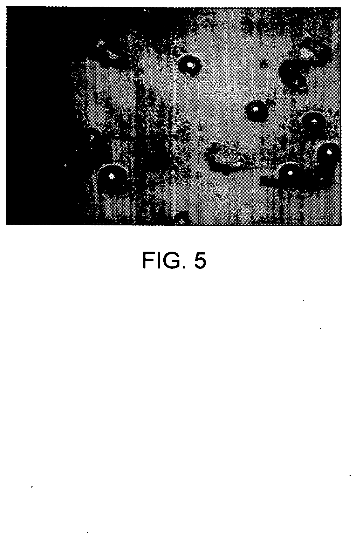

Referring to FIG. 4 and FIG. 5, these illustrate densified and spheroidized 7YSZ product particles 15 by atomizing 7YSZ solution precursor using nebulizer 16. Particles 15 exhibit a "pearl" like texture and morphology. Particles 15 measure approximately between 20 micrometers (µm) and 53 micrometers (µm) in diameter as shown in FIG. 4 (20 to 38 µm), and FIG. 5 (38 to 53 µm) after post-classification with sieves having mesh sizes of 635 (20 µm), 400 (38 µm), and 270 (53 µm), respectively.

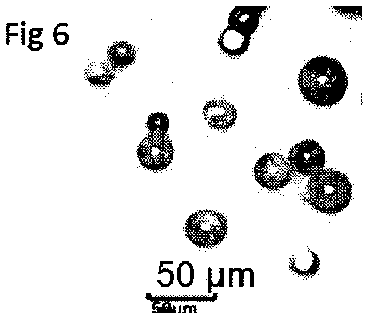

In yet another embodiment, a different feeder than a nebulizer can be used to produce atomized precursor droplets. In this case, a piezo driven droplet maker is used to generate a stream jet of uniform droplets of 8%-weight YSZ precursor which are then injected into the plasma hot zone of the microwave plasma apparatus described previously in FIG. 1. This droplet maker apparatus is described in patent application published under number WO 2014052833 A1. Referring to Fig. 6, spheroidized and densified 8YSZ product particles are produced with a size ranging from 15 to 35 micrometers as measured using an optical microscope. A scale of 50 micrometers is included in FIG. 6. These spheres are pearl like indicating the presence a smooth surface for spherical and dense particles thus enhancing the flowability of such powder.

In yet another embodiment, an entraining gas is added to the central feeding tube so as to entrain the powder particle matter into the plasma and control the powder particle matter velocity and residence time in the plasma. The entraining gas can be chosen to be compatible with the powder particle matter processing goal. For instance, if the material being processed needs to be kept from oxidizing or being reduced, then an inert gas such as argon can be chosen. If the material to be spheroidized is to be oxidized, then oxygen gas may be used, and if the material to be spheroidized is to be reduced, then hydrogen or ammonia can be used.

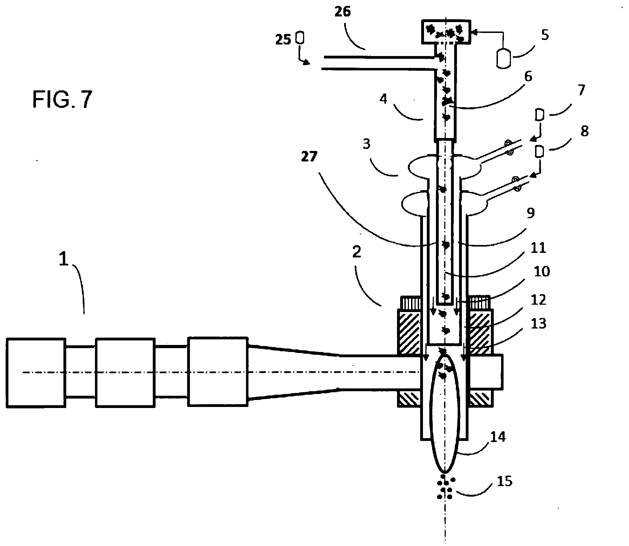

Referring to FIG. 7, a pressurized source **25** is used to introduce additional entrainment gas into tube inlet **26** in communication with exit nozzle **27** of powder feeder **4** containing feed particles **6** which are accelerated inside central tube **28** of plasma torch **3.** The flow rate of injected gas **25** is determined according to the size and morphology of injected particle powders to optimize the melting conditions of these particles in the plasma zone. It is well known by those skilled in the art that additional gas **25** can be injected so that it is collinear with the direction of flow of feed particles **6** by an obvious change in the manner of communication of inlet **26** with powder feeder exit nozzle **27** and central tube **28** of plasma torch **3.**

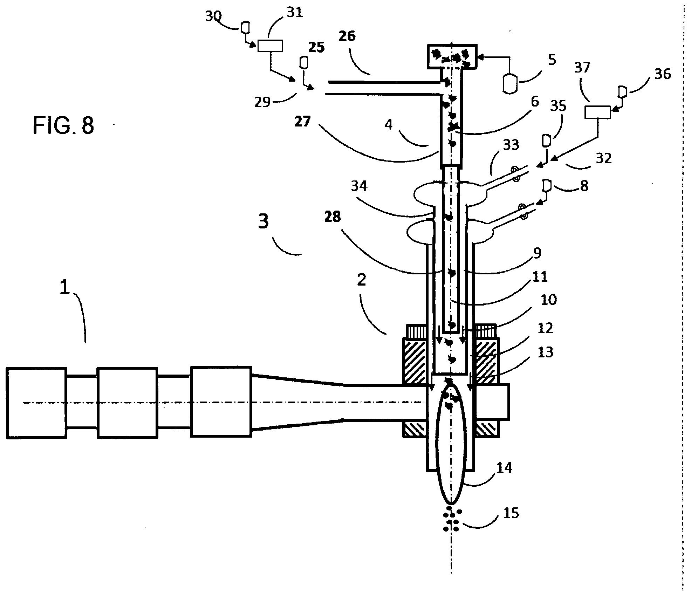

In yet another embodiment, passivation-inducing fluid is added into the process so as to passivate and/or coat the spheroidized powder. The passivation fluid can be either gaseous or atomized solution. Referring to FIG. **8****,** pressurized source **25** is used to introduce passivation fluid **29** in the form of a gas phase into inlet tube **26** in communication with exit nozzle feeder **27** of powder feeder **4** which contains feed particles **6.** Referring to FIG **8** again, the passivation materials **29** can be introduced as a mist using atomizing gas source **30** and nebulizer **31** into inlet tube **26** in communication with exit nozzle feeder **27** of powder feeder **4** which contains deed particles **6.** The mixture of passivation material and feed particles travel together in central tube **28** towards the plasma zone where the passivation material chemically reacts with feed particles **6.**

Referring to FIG.8, the passivation-inducing fluid **32** can also be added through inlet tube **33** in communication with middle tube **34** of plasma torch **3.** Passivation fluid **32** is introduced as gas using pressurized source **35** or as mist using a combination of atomizing gas **36** and nebulizer **37.** The mixture of passivation material **32** and feed particles **6** are mixed together in the middle tube **34** at the outlet end of central tube **28** and entrained together towards the plasma zone where the passivation material chemically reacts **32** with feed particles **6.**

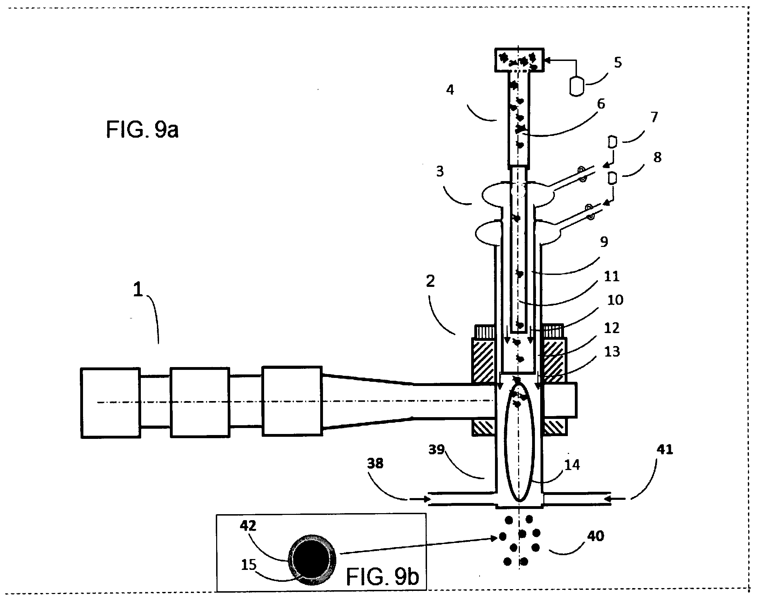

In yet another embodiment, the passivation fluid is injected into the process through an additional injection port, located after the microwave injection port, i.e., downstream the plasma hot zone. In this situation, the powder is first spheroidized, and then exposed to the passivation fluid that can be in the form of a gas or atomized solution. The object of this invention is to provide means to produce core-shell like microstructure of spheroidized particle products. Referring to FIG. 9a. Passivation fluid material is injected as a gas phase or atomized droplets into inlet **38** inside plasma gas exhaust chamber **39** so that passivation fluid material is deposited on plasma processed particle **15** to produce coated particle **40.** Passivation fluid material can be introduced as a gas or atomized droplets using the means described in paragraphs **[0037]** and [0038] . A second tube inlet **41** and even a multitude of inlet tubes can be used to introduce the same passivation fluid material or a combination of different coating fluid materials. It is obvious for someone skilled in the art that the number of these inlets into exhaust chamber **39** can be increased to accommodate a composite mixture for the desired passivation or coating layer depending on the applications. Referring to FIG. 9b, a magnified passivated or coated particle **40** is shown with the spheroidized core **15** and shell-like passivation coating **42.**

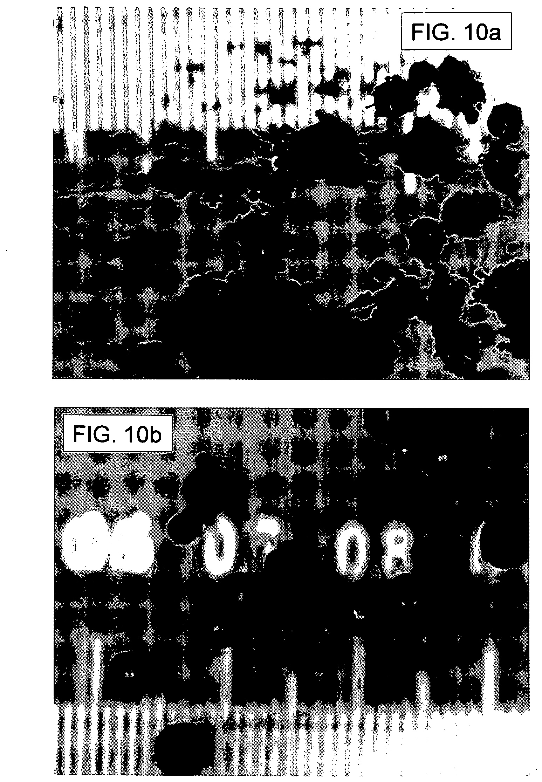

This method as described in paragraph [0031] has been applied to spheroidize particles made of a blend of commercial alumina-titania and cobalt oxide powders shown in FIG. 10 a. This blend consists of 80%- weight alumina-titania (Al₂O₃-13TiO₂) and 20%-weight cobalt oxide (CoO) agglomerated powder particles obtained by the spray -drying technique averaging 37 micrometers in diameter. The white graduated scale (ruler) in the background indicates 100 micrometers between two long graduated bars, while the distance is 10 micrometers between two consecutive small graduation bars. FIG. 10b shows spheroidized and densified product particles after processing through the microwave plasma. It can be seen that most of the product particles exhibit a pearl-like texture with a diameter size ranging between 10 and 50 microns.

The electrodeless microwave generated plasma can be used to purify a wide range of materials. Presence of electrodes to generate plasma, such as arc plasma processes, introduces impurities during in-flight melting of processed materials. Impurities are made of electrode material as the electrode wear out due to high operating temperatures of arc plasmas. Absence of electrodes to generate microwave plasma used in the present method eliminates contamination and provides for the production of high purity processed materials.

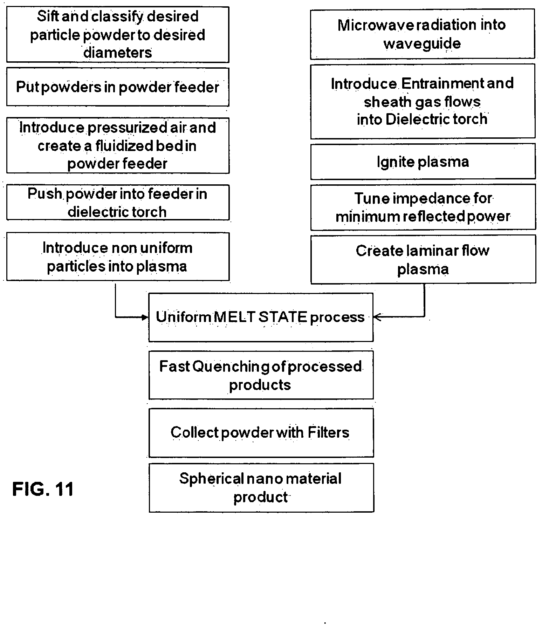

Referring to FIG. 11, the densified and spheroidized particles are made according to the procedure described therein. The powder particles to be processed are first sifted and classified according to their diameters, the minimum diameter is 20 µm and the maximum diameter is 74 µm. This eliminates recirculation of light particles above the hot zone of the plasma chamber and also ensures that the process energy present in the plasma is sufficient to melt the particles. This powder is then disposed in a powder feeder where a fluidized bed, in an internal chamber using a relatively low pressurized source of air not exceeding 100 kPa (20 pounds per square per inch (PSI)), is introduced. For a better flow of the powder, the powder feeder is constantly shaken using a shaker energized by another pressurized source of air having a minimum pressure of 100 kPa (20 pounds per square per inch (PSI)). The powder is carried from inside the powder feeder towards the input of the feeding tube of the dielectric plasma torch under pressure which permits a constant injection of particles into the plasma process. Prior to this, and referring to the right side of FIG. 11, microwave radiation is introduced into the waveguide towards the plasma chamber where the dielectric plasma torch is located, and placed perpendicularly to the waveguide. Two annular flows are introduced; one for entrainment of injected particles and the other flow protects the inner wall of the outer tube of the plasma torch from melting under the effect of the high heat from the plasma. Once both flows are in place, the plasma is ignited inside the dielectric plasma torch. An appropriate combination of entrainment and cooling flows are chosen to stabilize the plasma. In addition, these entrainment and cooling flows are chosen to allow smooth circulation of particles towards the plasma and avoid turbulence that could create recirculation and back flow of powders above the hot zone of the chamber. In addition these entrainment and cooling flows are chosen to minimize any non- uniformity in the thermal path in the outward radial direction away from axis **11.** Once the particles reach the plasma now present in the hot zone, they are subjected to a uniform melt state characterized by a uniform thermal path for particles along with a uniform temperature profile of the plasma in the hot zone. The particles are processed volumetrically and uniformly and exit into an atmospheric fast quenching chamber below the exit nozzle of the plasma. The product upon solidification is collected in nylon or stainless steel filters, or quenched in distilled water in some applications, and analyzed for its microstructure and its mechanical, optical, and thermal properties.

Referring to FIG. 12, the figure illustrates a procedure to produce densified and spheroidized particles using solution droplets. The desired chemical composition is first mixed according to the assigned proportions of reactants. Subsequently it is thoroughly stirred to yield a homogenous molecular mix of reactants. The solution is then poured into a stainless steel tank. A pressurized source of air is used to inject air into the tank and push the solution towards an injector nozzle similar to a nebulizer, and injected into the central feeding tube of the nebulizer where it emerges as a jet. At the same time, another pressurized source is used to push air into an outer concentric tube of the nebulizer which penetrates the solution jet perpendicularly. Consequently this atomizes the jet into a mixture of droplets of different size diameters which are directed towards the plasma. Prior to this, referring to the right side of FIG. 12, the procedure to ignite the plasma is repeated as described in the paragraph referring to FIG. 11. Microwave radiation is introduced into the waveguide towards the plasma chamber where the dielectric plasma torch is located, and placed perpendicularly to the waveguide. Two annular flows are introduced; one for the entrainment of injected particles and the other flow to protect the inner wall of the outer tube of the plasma torch from melting under the effect of the high heat from the plasma. Once both flows are in place, the plasma is ignited inside the dielectric plasma torch. Adequate combination of entrainment and cooling flows are chosen to stabilize the plasma. Also, these flows are chosen so as to allow a smooth circulation of droplets towards the plasma and avoid turbulence that could create recirculation and back flow of powders above the hot zone of the plasma chamber, as well as avoiding a disruption in the thermal path. Once the droplets reach the plasma now present in the hot zone, they are subjected to a uniform melt state characterized by a uniform thermal path along with a uniform temperature profile of the plasma in the hot zone. The droplets are processed volumetrically and uniformly as solvent materials produced by oxidization and reduction reactions are burnt off. The processed particles exit into an atmospheric fast quenching chamber below the exit nozzle of the plasma. Upon solidification, the product is collected in filters, or in some applications quenched in distilled water, and analyzed for its microstructure and its mechanical, optical, and thermal properties.

Referring to FIG. 13, the figure illustrates a procedure to produce densified and spheroidized particles using uniform solution precursor droplets produced using a droplet maker. The desired solution's chemical composition is prepared by first mixing the assigned proportions of reactants. Subsequently, the solution is thoroughly stirred to yield a homogenous molecular mix of reactants. The solution is then pumped inside the reservoir of a droplet maker by means of a peristaltic pump, or a pressurized tank. Once the reservoir is full, a piezo transducer is activated which impinges an adequate perturbation onto the liquid solution in the reservoir.. Once the perturbation satisfies Rayleigh's breakdown law, the solution emerges through a capillary nozzle as a continuous stream of uniform droplets exiting at a constant speed for a given drive frequency of the piezo. The nature of the droplets stream is monitored so that it is not in a burst mode or incidental mode but in the form of a jet with uniform droplets. This stream of droplets is then injected into the feeding tube of the dielectric plasma torch where it undergoes the same plasma process, and subsequently is transformed into a collection of dense and spheroidized particles as described in the paragraphs referring to FIG. 11 and FIG. 12.

### Examples

### Example 1: Spheroidization of MgO-Y₂O₃ spray dried particles

Referring to FIG. 2, this method has been applied to spheroidize particles made of commercial Magnesia-Yttria (MgO-Y₂O₃) solid powder particles obtained by the spray-drying technique from the Inframat Corporation. The densified and spheroidized particles exhibit a "pearl" like texture and morphology.

### Example 2: Spheroidization of atomized 7YSZ solution precursor

Referring to FIG. 4 and FIG. 5, this method has been applied to produce dense and spheroidized particles directly from the injection of atomized droplets of 7%-weight Yttria-Stabilized-Zirconia (7YSZ) solution precursor using a nebulizer.

### Example 3: Spheroidized of a stream jet of uniform droplets of 8YSZ solution precursor

Referring to FIG. 6, this method has been applied to produce dense and spheroidized particles directly from the injection of uniform droplets of 8%-weight Yttria-Stabilized-Zirconia (8YSZ) solution precursor using a high frequency piezo driven droplet maker.

### Example 4: Spheroidization of blended alumina-titania oxide (Al₂O₃-13TiO₂) and cobalt oxide (CoO) powder particles

Referring to FIG 10, this method has been applied to spheroidize particles made of a blend consisting of 80%-weight alumina-titania (Al₂O₃-13TiO₂) and 20%-weight cobalt oxide (CoO) agglomerated powder particles obtained by the spray-drying technique. The densified and spheroidized particles exhibit a "pearl" like texture and morphology.

## Claims

1. A method of producing passivated spheroidal and dense powder product particles extracted from plasma exhaust gas following injection of feed materials consisting of powder particles (6) along with passivation material using a microwave plasma (14) and which method comprises:
a) introducing axially feed material into a materials feeder (4);
b) introducing passivation fluid (29) in the form of a gas phase through an inlet tube (26), using a pressurized source (25), in communication with material feeder (4) to create a mixture of said feed material and said passivation material, wherein said mixture of said feed material and said passivation material travel together toward the axisymmetric microwave plasma torch;
c) guiding said mixture of said feed material and said passivation material towards the microwave plasma (14) using a laminar cooling flow (13);
d) introducing said mixture of said feed material and said passivation material into said axisymmetric microwave plasma torch (14);
e) processing said feed material and said passivation material by exposing it to a uniform temperature profile within the microwave generated plasma (14);
f) filtering said exhaust gas of said microwave generated plasma (14); and
g) extracting coated powder products (40) from said filtered exhaust gas.

2. The method of claim 1 wherein said passivation fluid (32) is an atomized liquid material.

3. The method of claim 1 wherein said product particle (40) is spherical and has a shell-core structure (42, 15).

4. The method of claim 3 wherein the core (15) structure is made out of the feed material.

5. The method of claim 3 wherein the shell structure (42) is made out of the passivation material.

## Patentansprüche

1. Verfahren zum Herstellen passivierter sphäroidaler und dichter Pulverproduktpartikel, die aus Plasmaabgas extrahiert werden, nachdem Einsatzmaterialien, die aus Pulverpartikeln (6) bestehen, zusammen mit Passivierungsmaterial unter Verwendung eines Mikrowellenplasmas (14) eingespritzt wurden, und wobei das Verfahren umfasst:
a) axiales Einbringen von Einsatzmaterial in eine Materialzuführung (4);
b) Einbringen eines Passivierungsfluids (29) in der Form einer Gasphase durch ein Einlassrohr (26) unter Verwendung einer Druckquelle (25) in Austausch mit der Materialzuführung (4), um eine Mischung aus dem Einsatzmaterial und dem Passivierungsmaterial zu erzeugen, wobei sich die Mischung aus dem Einsatzmaterial und dem Passivierungsmaterial zusammen in Richtung des achsensymmetrischen Mikrowellenplasmabrenners bewegt;
c) Leiten der Mischung aus dem Einsatzmaterial und dem Passivierungsmaterial in Richtung des Mikrowellenplasmas (14) unter Verwendung einer laminaren Kühlströmung (13);
d) Einbringen der Mischung aus dem Einsatzmaterial und dem Passivierungsmaterial in den achsensymmetrischen Mikrowellenplasmabrenner (14);
e) Verarbeiten des Einsatzmaterials und des Passivierungsmaterials durch Aussetzen dessen einem gleichmäßigen Temperaturprofil innerhalb des mikrowellenerzeugten Plasmas (14);
f) Filtern des Abgases aus dem mikrowellenerzeugten Plasma (14); und
g) Extrahieren beschichteter Pulverprodukte (40) aus dem gefilterten Abgas.

2. Verfahren nach Anspruch 1, wobei das Passivierungsfluid (32) ein zerstäubtes flüssiges Material ist.

3. Verfahren nach Anspruch 1, wobei das Produktpartikel (40) kugelförmig ist und eine Kern-Hülle-Struktur (42, 15) aufweist.

4. Verfahren nach Anspruch 3, wobei die Kern(15)-Struktur aus dem Einsatzmaterial gefertigt wird.

5. Verfahren nach Anspruch 3, wobei die Hüllenstruktur (42) aus dem Passivierungsmaterial gefertigt wird.

## Revendications

1. Procédé de production de particules de produit en poudre, sphéroïdales et denses, passivées, extraites de gaz d'échappement de plasma après injection de substances de base constituées de particules de poudre (6) et d'un matériau de passivation à l'aide d'un plasma micro-ondes (14), et lequel procédé comprend :
a) l'introduction axiale de la substance de base dans un dispositif d'alimentation en matières (4) ;
b) l'introduction du fluide de passivation (29) sous la forme d'une phase gazeuse à travers un tube d'entrée (26), à l'aide d'une source sous pression (25), en communication avec le dispositif d'alimentation en matières (4) pour créer un mélange de ladite substance de base et dudit matériau de passivation, dans lequel ledit mélange de ladite substance de base et dudit matériau de passivation se déplace ensemble vers la torche à plasma micro-ondes axisymétrique ;
c) le guidage dudit mélange de ladite substance de base et dudit matériau de passivation vers le plasma micro-ondes (14) à l'aide d'un flux de refroidissement laminaire (13) ;
d) l'introduction dudit mélange de ladite substance de base et dudit matériau de passivation dans ladite torche à plasma micro-ondes axisymétrique (14) ;
e) le traitement de ladite substance de base et dudit matériau de passivation en les exposant à un profil de température uniforme à l'intérieur du plasma généré par micro-ondes (14) ;
f) la filtration desdits gaz d'échappement dudit plasma généré par micro-ondes (14) ; et
g) l'extraction des produits en poudre revêtus (40) desdits gaz d'échappement filtrés.

2. Procédé selon la revendication 1, dans lequel ledit fluide de passivation (32) est un matériau liquide atomisé.

3. Procédé selon la revendication 1, dans lequel ladite particule de produit (40) est sphérique et a une structure noyau-enveloppe (42, 15).

4. Procédé selon la revendication 3, dans lequel la structure de noyau (15) est constituée de la substance de base.

5. Procédé selon la revendication 3, dans lequel la structure d'enveloppe (42) est constituée du matériau de passivation.
